# EUROPEAN PATENT APPLICATION

(11) **EP 4 563 751 A1**
(43) Date of publication of application: **04.06.2025**
(21) Application number: 24214259.4
(22) Date of filing: 20.11.2024
(51) Int. Cl.: E02D 27/00, B60L 53/30, B60L 53/31, E02D 27/32

(54) **EMBEDDED FOUNDATION FOR ELECTRIC VEHICLE CHARGING STATION**

(30) Priority: 21.11.2023 NO 20231262
(71) Applicant: Onepole AS, 4628 Kristiansand (NO)
(72) Inventor: Sjeggestad, Sven Olav, 4628 Kristiansand (NO)
(74) Representative: Bryn Aarflot AS

(57) **Abstract**

A foundation (10) configured for an electric vehicle charging station, the foundation (10) consisting of only three parts: i) an elongated main wall plate (11), ii) a substantially square top plate (12), and iii) a substantially square bottom plate (13), where the elongated main wall plate (11) comprises three weak links (40) contributing for folding up the main wall plate (11) from a flat-packed condition to a three-dimensional ready-for-embedment condition and together with the top plate (12) and the bottom plate (13) constitute the ready-for-embedment foundation (10) by means of pairs of cooperating fastening means (20, 30; 21; 31; 22, 32).

## Description

### TECHNICAL FIELD

The invention relates to an embedded foundation for an electric vehicle (EV) charging station.

### BACKGROUND OF THE INVENTION

An embedded foundation for an electric vehicle charging station is a structural support system that is installed beneath the ground in order to securely anchor an electric vehicle (EV) charging station. This foundation ensures that the charger or charging post of the charging station will remain stable, level and securely attached to the ground, even when subjected to various environmental conditions and potential loads from charging cables and/or vehicles.

There are known such foundations made of concrete or reinforced concrete, or of cast or molded metal.

Two drawbacks of the known foundations are for example that these foundations are quite heavy, and that their logistics and transportation are complicated.

### SUMMARY OF THE INVENTION

It is an object of the present invention to provide a new embedded foundation for an electric vehicle charging station that is not so heavy as conventional foundations.

Another object of the invention is to provide a new embedded foundation for an electric vehicle charging station that takes less place than the known conventional foundations.

Yet another object of the invention is to provide a new embedded foundation that is easy to transport, and that, when using the same means of transportation, it will be possible to load several times more embedded foundations than when loading the known conventional foundations.

Yet another object of the invention is to provide a new embedded foundation that is cheaper than the known conventional foundations.

According to a first aspect of the invention this is achieved with a foundation configured for an electric vehicle charging station. The foundation consists of only three parts: i) an elongated main wall plate, ii) a substantially square top plate and iii) a substantially square bottom plate. The elongated main wall plate is configured to have two states: 1) an unassembled flat initial state and 2) a ready-for-embedment final state. The elongated main wall plate further comprises three weak links arranged along the longitudinal direction of the main wall plate and being perpendicular to the longitudinal direction of the main wall plate so that four walls are distinguished by the three weak links. A first fastening means is arranged along a first short side of the main wall plate. A second fastening means is arranged along a second short side of the main wall plate. The first fastening means is configured to cooperate with the second fastening means, so that, when the main wall plate is folded along the weak links and the first fastening means is engaged with the second fastening means, the main wall plate will get a three-dimensional form. A third fastening means is arranged along a first long side of the main wall plate. A fourth fastening means is arranged along a second long side of the main wall plate. The third fastening means is configured to cooperate with a fastening means of the bottom plate arranged along the four sides of the bottom plate. The fourth fastening means is configured to cooperate with a fastening means of the top plate arranged along the four sides of the top plate, so that, when the third fastening means is engaged with the fastening means of the bottom plate and the fourth fastening means is engaged with the fastening means of the top plate, the three-dimensional ready-for-embedment foundation is constituted.

The top plate comprises at least one set of at least four circumferential or peripheral or edge holes constituting attachment points configured for alignment with corresponding attachment points for a charger post of the electric vehicle charging station.

The first fastening means is at least two holes, and the second fastening means is at least two collars configured to engage with the respective at least two holes.

Each of the third and fourth fastening means of the main wall plate is a set of several holes arranged near the two long sides of the main wall plate. The fastening means of the top and bottom plates, respectively, are collars arranged on the four sides of the top and bottom plates, or vice versa.

Each or some of the collars is/are provided with at least one locking mechanism configured for preventing the collar from easily sliding out of the corresponding hole.

Each or some of the distinguished walls of the main wall plate comprise(s) at least one hole therethrough.

At least one of the top plate and the bottom plate comprises, approximately in the middle thereof, a hole.

The main features of this invention are given in the independent claims. Additional features of the present invention are given in the dependent claims.

### BRIEF DESCRIPTION OF THE DRAWINGS

These and other aspects of the invention are apparent from and will be further elucidated, by way of example(s), with reference to the drawings, wherein:
Fig. 1 shows a known foundation for made of concrete or reinforced concrete.
Fig. 2 shows a known foundation for made of cast or molded metal.
Fig. 3 illustrates in perspective a new foundation according to the present invention adapted for an electric vehicle charging station and configured to be embedded beneath the ground.
Fig. 4 illustrates the new foundation according to the present invention in an unassembled flat condition.
Fig. 5 illustrates another embodiment of the new foundation according to the present invention in an unassembled flat condition.

### DETAILED DESCRIPTION OF THE EMBODIMENTS

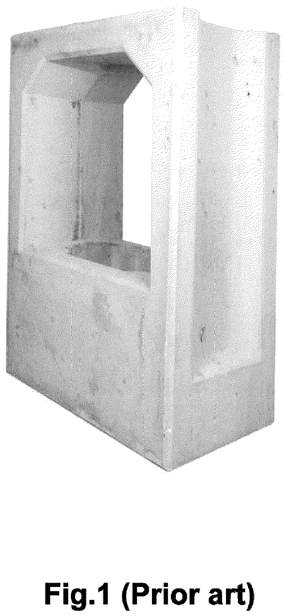

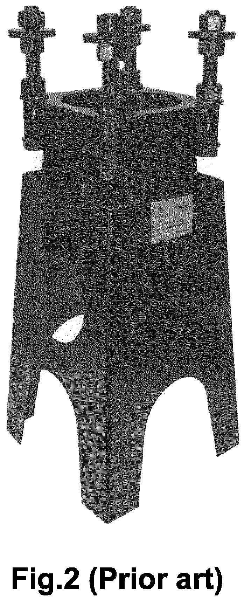

Figures 1 and 2 present examples of conventional foundations for an electric vehicle charging station.

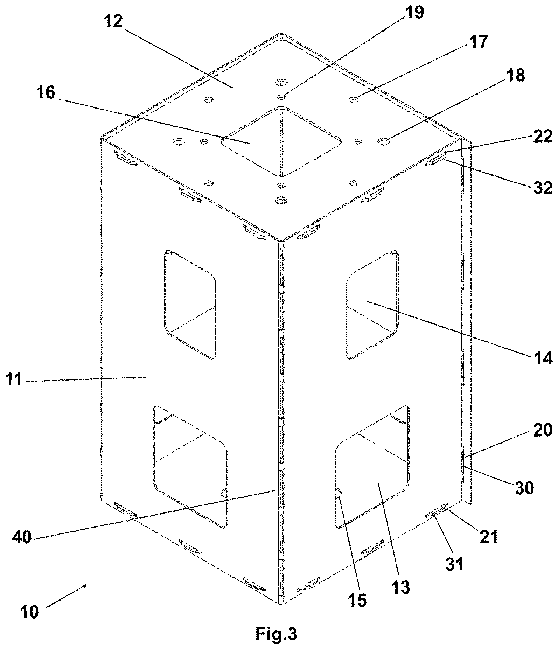

Figure 3 presents a new foundation 10 according to the present invention, wherein the new foundation 10 is in a ready-for-embedment condition and is configured for an electric vehicle charging station (not shown).

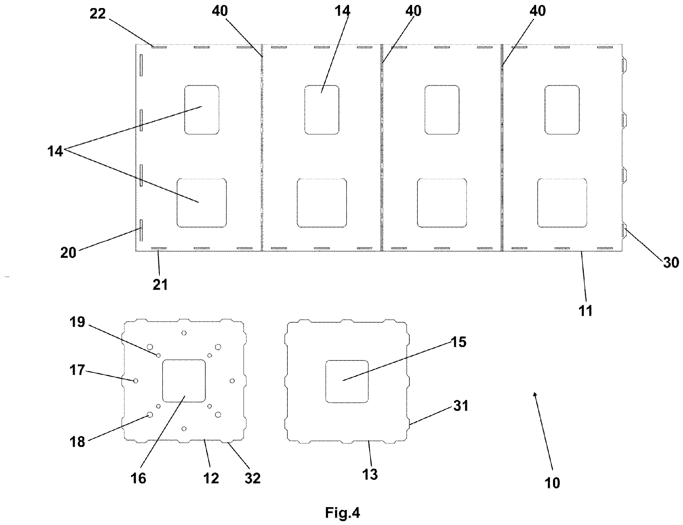

Figure 4 illustrates the new foundation 10 in an unassembled flat condition.

The new foundation 10 consists of only three parts: i) an elongated main wall plate 11, ii) a substantially square top plate 12, and iii) a substantially square bottom plate 13. The three plates 11, 12, 13 can be made of the same material, such as but not limited only to, for example, metal or metal alloy or composite or reinforced composite. Alternatively, the material of the main wall plate 11 can differ from the material of the top and bottom plates 12, 13. Finally, in a third embodiment, the material of each plate can differ from the material of either of the other two plates, meaning that each plate can be made of its own material differing from the other two materials.

The main wall plate 11 comprises further three (-3-) weak links 40 which can be evenly arranged along the longitudinal direction of the main wall plate 11, the three weak links 40 being also perpendicular to the longitudinal direction of the main wall plate 11, so that four walls with equal areal and size can be distinguished (as shown in figures 3 and 4). Alternatively, the three weak links 40 can be arranged along the longitudinal direction of the main wall plate 11 in such a manner, so that, in the longitudinal direction of the main wall plate 11 and for example from one short side of the main wall plate 11 to the other short side of the main wall plate 11, the first wall will have the same areal and size as the third wall, and the second wall will have the same areal and size as the fourth wall.

The weak links 40 can be constituted as holes in the main wall plate 11. Alternatively, the weak links 40 can be constituted as grooves in the main wall plate 11 so that the thickness of the weak links 40 is less than the thickness of the main wall plate 11. The grooves can then have a suitable shape, such as for example but not limited only to V-shape or U-shape.

Each or at least one of the distinguished walls of the main wall plate 11 can have at least one hole 14 therein configured for reception of cable(s) and/or gravel therein. Each hole 14 can have a suitable shape, such as for example but not limited only to square or circular. In the embodiment shown on figures 3 and 4 each of the four equal walls is provided with two holes 14 which are square.

On one short side or edge of the main wall plate 11 a first fastening means 20 can be arranged. On the other short side or edge of the main wall plate 11 a second fastening means 30 can be arranged. The first fastening means 20 is configured to cooperate with the second fastening means 30. In the embodiment on figures 3 and 4 the first fastening means 20 can be at least two holes, and the second fastening means 30 can be at least two collars, so that when the main flat wall plate 11 is folded along the three weak links 40 the collars 30 will go into the respective holes 20 and the fastening will be secured. In order to ensure that the collars 30 remain securely fastened when inserted through the holes 20, each collar 30 could have a flange or flared end that is larger in diameter than the hole 20. This would prevent the collar 30 from slipping back through the hole 20 once it's inserted. Alternatively, each collar 30 can be provided with a slight taper, where the end that goes through the hole 20 is slightly narrower than the rest of the collar 30, so that this can help create a locking effect once the collar 30 is pushed through the hole 20. Locking mechanisms, such as snap rings, retaining clips, or other types of locking devices that engage with the collar or hole to prevent unintended disassembly, can also be used. Furthermore and alternatively, grooves, ridges or detents on the collar 30 can provide a mechanism that engages with the hole 20 or its edges, preventing the collar 30 from easily sliding out. In yet another embodiment the collar 30 can be designed with a slightly larger diameter than the hole 20 and using an interference fit (press fit) can create a tight connection that resists movement.

On one long side or edge of the main wall plate 11 a third fastening means 21 can be arranged. On the other long side or edge of the main wall plate 11 a fourth fastening means 22 can be arranged. The third fastening means 21 can be configured to cooperate with a fastening means 31 of the bottom plate 13 arranged along the four sides or edges of the bottom plate 13. The fourth fastening means 22 can be configured to cooperate with a fastening means 32 of the top plate 12 arranged along the four sides or edges of the top plate 12.

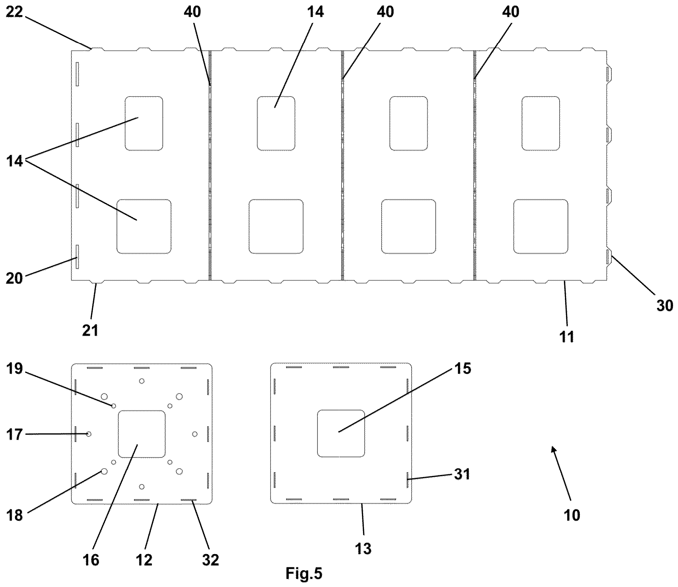

In the embodiment on figures 3 and 4 each of the third and fourth fastening means 21, 22 of the main wall plate 11 can be a set of several holes arranged near the two long sides or edges of the main wall plate 11. The fastening means 31, 32 of the top and bottom plates 12, 13, respectively, can be collars arranged on the four edges or sides of the top and bottom plates 12, 13. Vice versa can also be possible, meaning that the fastening means 31, 32 of the top and bottom plates 12, 13 can be peripherally arranged holes near the four edges of each of the top and bottom plates 12, 13, and the third and fourth fastening means 21, 22 of the main wall plate 11 can be collars arranged on the two long sides or edges of the main wall plate 11 (fig. 5). The last-mentioned fastening means 21, 22, 31, 32 can also be configured as previously described with regard to the fastening means 20, 30.

Other suitable fastening means for the plates 11, 12, 13 can also be used.

Furthermore, the bottom plate 13 can comprise approximately in the middle thereof a hole 15, and the top plate 12 can comprise approximately in the middle thereof a hole 16. The shape of the holes 15, 16 can be as described with respect to the holes 14.

The top plate 12 can also comprise at least one set of at least four circumferential or peripheral or edge holes 17 serving as attachment points for the charger post of the EV charging station. In the embodiment on figures 3 and 4 there are three sets 17, 18, 19 of at least four circumferential or peripheral or edge holes, so that different charger posts having different sizes and/or from different producers can be placed and firmly mounted onto the foundation 10 by using mounting elements, such as bolts, screws and/or brackets, etc., that cooperate with the respective set of holes.

When an appropriate location for the EV charging station is found a hole or trench in the ground is excavated at that chosen location in order to accommodate the embedded foundation 10.

The flat-packed foundation 10 in said unassembled condition should be prepared for lowering into the trench, i.e. should be placed in said ready-for-embedment condition. This is made on site by an installer or mechanic, who is folding the main wall plate 11 along the three weak links 40, then puts the top and bottom plates 12, 13 at their respective places, and finally secures all of the fastening means, so that the foundation 10 gets its desired three-dimensional form.

After placing the foundation 10 into the excavated trench, the necessary cable(s), power supply line(s) and/or communication cable(s) are installed.

Then gravel is placed therein (i.e. into the foundation 10) through the holes 14, 15, 16. Additionally concrete can be poured between the foundation 10 and the walls of the trench. Alternatively, concrete can be poured into the foundation 10 as well as between the foundation 10 and the walls of the trench.

The concrete is typically mixed using a specific ratio of cement, aggregates (such as sand and gravel), water and sometimes additives. The concrete mixture should be well-proportioned and mixed thoroughly to ensure uniformity.

The design of the foundation 10 should be ensured that it extends below the frost line (if applicable) to prevent ground movement due to freezing and thawing cycles.

Then the charging post is placed onto or positioned over the embedded foundation 10. The charger post is designed with corresponding attachment points that align with the set of holes 17, 18, 19 and together with the mounting elements (bolts, nuts, screws, other appropriate fasteners, etc.) a secure attachment of the charging post onto the embedded foundation 10 is provided. This connection ensures that the charger post, respectively the EV charging station, remains stable and upright.

Alternatively, the charging cable(s), power supply line(s) and/or communication cable(s) can be connected to the appropriate terminals within the charger post after the step involving gravel and/or concrete and after the charger post is secured onto the embedded foundation 10.

Once everything is confirmed to be in working order, any excavated soil can be backfilled around the embedded foundation 10 to fill the hole or trench. If necessary, the area can be leveled and finished in order to create a clean and organized appearance.

The embedded foundation 10 is serving as the backbone of the EV charging station, providing stability and safety for both the charging post and the vehicles using the charger.

Additional modifications, alterations and adaptations of the present invention will suggest themselves to those skilled in the art without departing from the scope of the invention as defined in the following patent claims.

## Claims

1. A foundation (10) configured for an electric vehicle charging station, the foundation (10) consisting of only three parts: i) an elongated main wall plate (11), ii) a substantially square top plate (12), and iii) a substantially square bottom plate (13), wherein the elongated main wall plate (11) is configured to have two states: 1) an unassembled flat initial state and 2) a ready-for-embedment final state, wherein the elongated main wall plate (11) further comprises three weak links (40) arranged along the longitudinal direction of the main wall plate (11) and being perpendicular to the longitudinal direction of the main wall plate (11) so that four walls are distinguished by the three weak links (40), wherein a first fastening means (20) is arranged along a first short side of the main wall plate (11), and a second fastening means (30) is arranged along a second short side of the main wall plate (11), wherein the first fastening means (20) is configured to cooperate with the second fastening means (30), so that when the main wall plate (11) is folded along the weak links (40) and the first fastening means (20) is engaged with the second fastening means (30) the main wall plate (11) gets a three-dimensional form, wherein a third fastening means (21) is arranged along a first long side of the main wall plate (11) and a fourth fastening means (22) is arranged along a second long side of the main wall plate (11), wherein the third fastening means (21) is configured to cooperate with a fastening means (31) of the bottom plate (13) arranged along the four sides of the bottom plate (13), and the fourth fastening means (22) is configured to cooperate with a fastening means (32) of the top plate (12) arranged along the four sides of the top plate (12), so that when the third fastening means (21) is engaged with the fastening means (31) of the bottom plate (13) and the fourth fastening means (22) is engaged with the fastening means (32) of the top plate (12) the three-dimensional ready-for-embedment foundation (10) is constituted.

2. The foundation (10) according to claim 1, wherein the top plate (12) comprises at least one set (17, 18, 19) of at least four circumferential or peripheral or edge holes constituting attachment points configured for alignment with corresponding attachment points for a charger post of the electric vehicle charging station.

3. The foundation (10) according to claim 1 or claim 2, wherein the first fastening means (20) is at least two holes, and the second fastening means (30) is at least two collars configured to engage with the respective at least two holes.

4. The foundation (10) according to any one of claims 1-3, wherein each of the third and fourth fastening means (21, 22) of the main wall plate (11) is a set of several holes arranged near the two long sides of the main wall plate (11), and the fastening means (31, 32) of the top and bottom plates (12, 13), respectively, are collars arranged on the four sides of the top and bottom plates (12, 13), or vice versa.

5. The foundation (10) according to claim 3 or claim 4, wherein each or some of the collars is/are provided with at least one locking mechanism configured for preventing the collar from easily sliding out of the corresponding hole.

6. The foundation (10) according to any one of claims 1-5, wherein each or some of the distinguished walls of the main wall plate (11) comprise(s) at least one hole (14) therethrough.

7. The foundation (10) according to any one of claims 1-6, wherein at least one of the top plate 12 and the bottom plate 13 comprises approximately in the middle thereof a hole (15, 16).
